# EUROPEAN PATENT APPLICATION

(11) **EP 3 040 814 A1**
(43) Date of publication of application: **06.07.2016**
(21) Application number: 15202235.6
(22) Date of filing: 22.12.2015
(51) Int. Cl.: G06F 3/01

(54) **SYSTEMS AND METHODS FOR GENERATING HAPTICALLY ENHANCED OBJECTS FOR AUGMENTED AND VIRTUAL REALITY APPLICATIONS**

(30) Priority: 31.12.2014 US 201414587210
(71) Applicant: Immersion Corporation, San Jose, CA 95134 (US)
(72) Inventor: WU, Liwen, Montreal, Quebec H2W 2R2 (CA); HAMAM, Abdelwahab, Montreal, Quebec H2W 2R2 (CA); ALHALABI, Amer, Montreal, Quebec H2W 2R2 (CA); GRANT, Danny A., Laval, Québec H7M 2A1 (CA)
(74) Representative: Beck Greener

(57) **Abstract**

A system includes a memory device configured to store a virtual object and associated haptic asset, an augmented or virtual reality device configured to generate an augmented or virtual reality space configured to display the virtual object, and an electronic device that includes a haptic output device constructed and arranged to generate a haptic effect based on the haptic asset when the augmented or virtual reality device detects an interaction involving the virtual object.

## Description

The present invention is related to systems and methods for generating haptically enhanced objects for augmented and virtual reality applications.

Augmented reality ("AR") devices provide an augmented reality environment in which physical objects in a physical space are concurrently displayed with virtual objects in a virtual space. Various augmented reality devices recognize specific codes (e.g., QR codes) disposed on physical objects and display one or more virtual objects in a view that includes the physical objects augmented with the virtual objects based on the specific codes. Other augmented reality devices can recognize specific, known physical objects using image recognition such as by transmitting images to a server that performs the image recognition. Virtual reality ("VR") devices provide a virtual world environment in which a user of a VR device is typically represented in the virtual world environment as an avatar, and the user may control movement of the avatar within the virtual world environment.

Although a potential advantage of augmented reality technology over virtual reality technology is being able to overlay virtual objects to the real world, virtual reality technology may replace the real world with a virtual world that is composed of virtual objects. Unfortunately, users are not able to feel those virtual objects, because the virtual objects do not actually exist.

It is desirable to add haptics to virtual objects in augmented and virtual reality applications to enhance the user experience so that when users interact with virtual objects, the users may be able to feel textures of the virtual objects, confirm touches, and feel collisions between virtual objects and physical objects and/or between virtual objects.

According to a first aspect of the invention, there is provided a system comprising a memory device configured to store a virtual object and associated haptic asset, an augmented or virtual reality device configured to generate an augmented or virtual reality space that is configured to display the virtual object, and an electronic device that includes a haptic output device constructed and arranged to generate a haptic effect based on the haptic asset when the augmented or virtual reality device detects an interaction involving the virtual object.

In an embodiment, the memory device is part of a server and the electronic device is configured to download the virtual object and associated haptic asset from the server. In an embodiment, the server is part of a cloud computing system. In an embodiment, the electronic device is configured to communicate the virtual object to the augmented or virtual reality device.

In an embodiment, the electronic device is a handheld electronic device. In an embodiment, the handheld electronic device includes a touch screen configured to allow a user of the system to interact with the virtual object.

In an embodiment, the electronic device is a wearable device.

In an embodiment, the augmented or virtual reality device is a head-mounted display.

In an embodiment, the memory device, the augmented or virtual reality device, and the electronic device are part of a single integrated device.

In an embodiment, the haptic asset comprises at least one parameter of a control signal for the haptic output device to generate the haptic effect. In an embodiment, the at least one parameter is selected from the group consisting of an amplitude, a frequency and a duration of the control signal.

In an embodiment, the electronic device is configured to determine a state of the virtual object, and the haptic effect is a predesigned haptic effect according to the state of the virtual object.

In an embodiment, the electronic device is configured to dynamically calculate haptic parameters according to a force input and physical properties of the virtual object.

In an embodiment, the electronic device is configured to monitor a state of the virtual object, and the haptic output device is configured to generate a different haptic effect when the state of the virtual object changes.

According to a second aspect of the invention, there is provided a method that includes retrieving a virtual object and associated haptic asset from a memory device;_displaying the virtual object in an augmented or virtual reality space generated by an augmented or virtual reality device; and generating a haptic effect based on the haptic asset with a haptic output device when the augmented or virtual reality device detects an interaction involving the virtual object.

In an embodiment, the method includes downloading a virtual object from the memory device of a server with an electronic device. In an embodiment, the server is part of a cloud computing system.

In an embodiment, generating the haptic effect includes determining a state of the virtual object and playing a predesigned haptic effect according to the state of the virtual object.

In an embodiment, generating the haptic effect includes dynamically calculating haptic parameters according to force input and physical properties of the virtual object.

In an embodiment, the method includes monitoring a state of the virtual object, and generating a different haptic effect when the state of the virtual object changes.

These and other aspects, features, and characteristics of the present invention, as well as the methods of operation and functions of the related elements of structure and the combination of parts and economies of manufacture, will become more apparent upon consideration of the following description and the appended claims with reference to the accompanying drawings, all of which form a part of this specification. It is to be expressly understood, however, that the drawings are for the purpose of illustration and description only and are not intended as a definition of the limits of the invention. As used in the specification and in the claims, the singular form of "a", "an", and "the" include plural referents unless the context clearly dictates otherwise.

The components of the following Figures are illustrated to emphasize the general principles of the present disclosure and are not necessarily drawn to scale. Reference characters designating corresponding components are repeated as necessary throughout the Figures for the sake of consistency and clarity.

Embodiments of the present invention will now be described with reference to the accompanying figures, in which:
Figure 1 is a schematic illustration of a system in accordance with embodiments of the invention;
Figure 2 is a schematic illustration of a processor of an electronic device of the system of Figure 1;
Figure 3 is a schematic illustration of a processor of an augmented or virtual reality device of the system of Figure 1;
Figure 4 is a schematic illustration of a processor of a server of the system of Figure 1;
Figure 5 is a schematic illustration of an augmented or virtual reality environment in accordance with an embodiment of the invention; and
Figure 6 is a flowchart illustrating a method in accordance with embodiments of the invention.

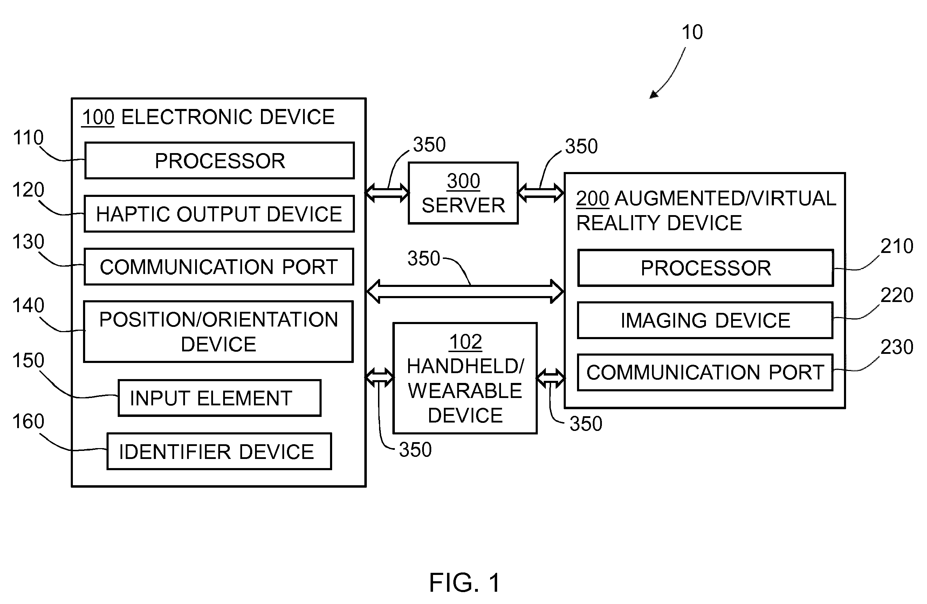

Figure 1 is a schematic illustration of a system 10 in accordance with an embodiment of the invention. As illustrated, the system 10 includes an electronic device 100, a handheld/wearable device 102, which may be part of or separate from the electronic device 100, an augmented/virtual reality ("AR/VR") device 200, a server 300, one or more communication channels 350, and/or other devices that may be in communication with the electronic device 100, the handheld/wearable device 102, the AR/VR device 200, and/or the server 300.

The electronic device 100 is configured to provide haptic feedback based on interaction between a user of the system 10 and a virtual object in an augmented reality ("AR") environment, as well as interaction between two virtual objects in the AR environment, and interaction between to virtual objects in a virtual reality ("VR") environment. For sake of convenience, the term "AR/VR environment" will be used herein to denote that at least a portion of such an environment includes a virtual reality space, as described in further detail below. The AR/VR environment may be generated by the AR/VR device 200 that is communicably coupled to the electronic device 100. It should be understood that in some embodiments of the system 10, the AR/VR device 200 may be only a virtual reality device and not include augmented reality aspects.

The AR/VR device 200 may generate the AR/VR environment and may be remote from the electronic device 100. As described in further detail below, the AR/VR environment may include a physical space in which at least one physical object exists and a virtual reality space in which one or more virtual objects that augment the physical object are displayed, or in which virtual objects that do not augment a physical object are displayed. In an embodiment, the AR/VR device 200 may be configured as a head-mounted device.

As illustrated in Figure 1, the electronic device 100 includes a processor 110 configured to receive a control signal from the AR/VR device 200 and/or the server 300, a haptic output device device 120 configured to generate a haptic effect based on the received control signal, a communication port 130, a position/orientation device 140, an input element 150, and an identifier device 160. More or less components than those illustrated in Figure 1 may be included in the electronic device 100. The illustrated embodiment is not intended to be limiting in any way.

As discussed in further detail below, in an embodiment, the handheld/wearable device 102, as well as the electronic device 100, may be configured as a wearable device in the form of a glove, a smartwatch, a bracelet, a ring, a thimble, and/or any other device that can be worn. In an embodiment, the handheld/wearable device 102, as well as the electronic device 100, may be configured as a handheld device, such as a stylus, a joystick, a mobile phone, a smartphone, a tablet, a video game controller, and/or any other handheld device that may be communicably coupled to the AR/VR device 200. In an embodiment, the electronic device 100 and the AR/VR device 200 may be separate devices in a single physical device. In an embodiment, the electronic device 100 and the AR/VR device 200 may be integrated in a single physical device, such as a mobile phone, a smartphone, a tablet, etc.

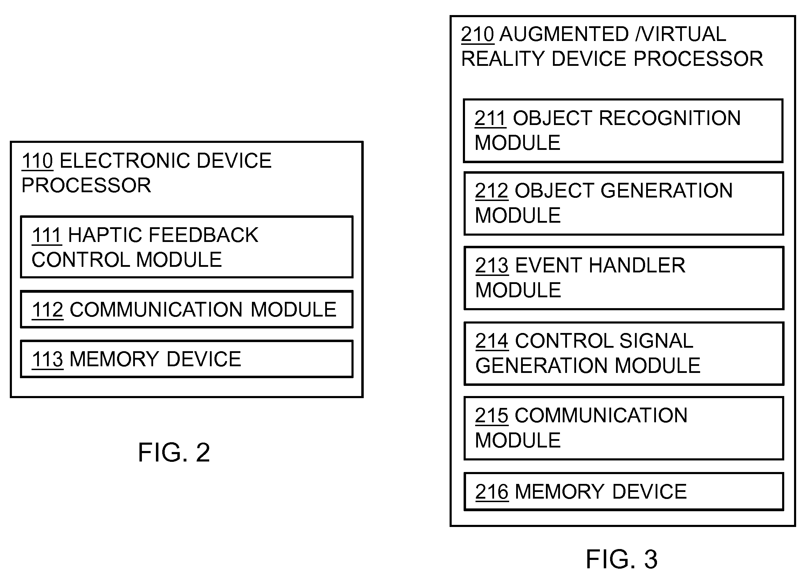

As illustrated in Figure 2, the processor 110 of the electronic device 100 is configured to execute one or more modules, including, for example, a haptic feedback control module 111, a communication module 112, and/or other computer program modules of the electronic device 100. The processor 110 may be a general-purpose or specific-purpose processor or microcontroller for managing or controlling the operations and functions of the electronic device 100. For example, the processor 110 may be specifically designed as an application-specific integrated circuit ("ASIC") to control input and output signals to/from the modules 111, 112. The processor 110 may also include electronic storage or a memory device 113. The memory device 113 may include one or more internally fixed storage units, removable storage units, and/or remotely accessible storage units. The various storage units may include any combination of volatile memory and non-volatile memory. The storage units may be configured to store any combination of information, data, instructions, software code, etc. The haptic feedback control module 111 may be configured to receive a control signal and cause the haptic output device 120 to provide feedback in the form of a haptic effect. The communication module 112 may be configured to facilitate communication between the electronic device 100 and the AR/VR device 200, the handheld/wearable device 102 and/or the server 300.

The haptic feedback control module 111 may be configured to receive a control signal from the server 300 and/or the AR/VR device 200 and cause the haptic output device 120 to provide the haptic feedback via the electronic device 100. In an embodiment, the control signal may be representative of an interaction between the user and a virtual object displayed by the AR/VR device 200. In an embodiment, the control signal may be representative of an interaction between virtual objects in the AR/VR environment displayed by the AR/VR device 200. In an embodiment, the control signal may represent an interaction between a virtual object and a physical object. In an embodiment, the haptic feedback control module 111 may be configured to provide the control signal to the haptic output device 120. In this embodiment, the control signal may be directly applied to the haptic output device 120 to cause the haptic feedback. In an embodiment, the haptic feedback control module 111 may be configured to determine a haptic feedback response based on the received control signal from the server 300 or the AR/VR device 200. In an embodiment, the haptic feedback control module 111 may consult a lookup table to determine the haptic feedback response based on the received control signal.

In an embodiment, the lookup table may store associations between a plurality of control signals and a plurality of haptic feedback responses. For example, when a control signal comprises information indicating that virtual object(s) were displayed in the AR/VR environment, the lookup table may store a different haptic feedback response for different virtual objects that may be displayed in the AR/VR environment. For example, the haptic feedback response may coordinate with one or more of the virtual objects indicated in the signal, such that the haptic feedback response corresponds to one or more characteristics of the one or more virtual objects indicated in the signal. When a control signal comprises information indicating an interaction between the electronic device 100 or the handheld/wearable device 102 and one or more virtual objects, the lookup table may store a different haptic feedback response for different interactions that may occur between the electronic device 100 or the handheld/wearable device 102 and the AR/VR environment. In an embodiment, the haptic feedback control module 111 may retrieve a haptic feedback response from the server 300 that is configured to store a lookup table comprising a plurality of control signals and associated feedback responses. The server 300 may be a cloud-based server that is part of a cloud computing system, or any other type of server.

In an embodiment, the communication module 112 may be configured to facilitate communication between the electronic device 100, the AR/VR device 200, the server 300, and/or the handheld/wearable device 102, which may comprise similar components and functionality as the electronic device 100, and/or other devices that may be in communication with the electronic device 100. The communication module 112 may be configured to provide a wired or wireless communication channel 350 for communication between the electronic device 100, the AR/VR device 200, the handheld/wearable device 102, the server 300, and/or other device in communication with the electronic device 100.

Returning to Figure 1, the haptic output device 120 may comprise one or more haptic output devices configured to provide haptic feedback the form of a haptic effect. The haptic feedback provided by the haptic output device 160 may be created with any of the methods of creating haptic effects, such as vibration, deformation, kinesthetic sensations, electrostatic or ultrasonic friction, etc. In an embodiment, the haptic output device 120 may include an actuator, for example, an electromagnetic actuator such as an Eccentric Rotating Mass ("ERM") in which an eccentric mass is moved by a motor, a Linear Resonant Actuator ("LRA") in which a mass attached to a spring is driven back and forth, or a "smart material" such as piezoelectric materials, electro-active polymers or shape memory alloys, a macro-composite fiber actuator, an electro-static actuator, an electro-tactile actuator, and/or another type of actuator that provides a physical feedback such as vibrotactile feedback. The haptic output device 120 may include nonmechanical or non-vibratory devices such as those that use electrostatic friction (ESF), ultrasonic friction (USF), or those that induce acoustic radiation pressure with an ultrasonic haptic transducer, or those that use a haptic substrate and a flexible or deformable surface, or those that provide thermal effects, or those that provide projected haptic output such as a puff of air using an air jet, and so on. Multiple haptic output devices 120 may be used to generate different haptic effects.

The haptic output device 120 may be configured to receive one or more signals, such as the control signal or the haptic feedback signal from the haptic feedback control module 111. Based on the one or more signals, the haptic output device 120 may provide haptic feedback via the electronic device 100. In an embodiment, the haptic output device 120 may be part of the handheld/wearable device 102 and the haptic feedback may be provided via the handheld/wearable device 102.

The communication port 130 may include an interface through which a communication channel 350 may be maintained with, for example, the AR/VR device 200. The control signal from the AR/VR device 200 may be received via the communication channel 350, which may include a wired or a wireless communication channel.

The position/orientation device 140 may be configured to provide the AR/VR device 200 with a position, an orientation, or both, of the electronic device 100 via the communication channel 350. The position/orientation device 140 may comprise a gyroscope, a geospatial positioning device, a compass, and/or other orienting or positioning devices.

The input element 150 may be configured to receive an input such as, for example, a button press, a gesture, and/or other input. The input may be communicated, by the processor 110, to the AR/VR device 200 via the communication channel 350. The input element 150 may include a touch pad, a touch screen, a mechanical button, a switch, and/or other input component that can receive an input.

The identifier device 160 may be configured to generate identifying indicia for the electronic device 100. The identifying indicia may be used by the AR/VR device 200 to identify the electronic device 100. The identifying indicia may comprise a visible optical signature (e.g., an optical signature that is within visible wavelengths of light) or a non-visible signature (e.g., an optical signature that is not within the visible wavelengths of light).

In some implementations, an augmented reality ("AR") symbol may be disposed on a surface of the electronic device 100. The AR symbol may be used, for example, to determine an orientation of the electronic device 100 within the AR/VR environment, identify the presence of the electronic device 100 in the AR/VR environment, and/or allow other forms of recognition of the electronic device 100. In an embodiment, the electronic device 100 may emit an audible signature, an infrared signature, and/or other signature that may be recognized by the AR/VR device 200.

The AR/VR device 200 may be configured to generate the AR/VR environment comprising both a virtual reality ("VR") space and a physical space. The AR/VR device 200 may comprise, for example, a processor 210, an imaging device 220, a communication port 230, and/or other components. The processor 210 may be configured to generate the VR space coincident with the physical space. The processor 210 may be configured to recognize at least one physical object in the physical space and augment the at least one physical object with one or more virtual objects in the VR space. The processor 210 may be configured to determine an event within the VR environment and communicate a control signal representative of that event to the device 100 via the wired or wireless communication channel 350. The control signal may cause haptic feedback to be generated at the device 100. The imaging device 220 may be configured to image the physical space. In an embodiment, the imaging device 220 may comprise one or more cameras, an infrared detector, a video camera, and/or other image recording device. The communication port 230 may comprise an interface through which a communication channel 350 may be maintained with, for example, the electronic device 100, the handheld/wearable device 102, and/or the server 300.

As illustrated in Figure 3, the processor 210 of the AR/VR device 200 is configured to execute one or more modules, including, for example, an object recognition module 211, an object generation module 212, an event handler module 213, a control signal generation module 214, a communication module 215, and/or other computer program modules. The processor 210 may be a general-purpose or specific-purpose processor or microcontroller for managing or controlling the operations and functions of the AR/VR device 200. For example, the processor 210 may be specifically designed as an application-specific integrated circuit ("ASIC") to control input/output signals to/from the modules 211, 212, 213, 214, 215. The processor 210 may also include electronic storage or a memory device 216. The memory device 216 may include one or more internally fixed storage units, removable storage units, and/or remotely accessible storage units. The various storage units may include any combination of volatile memory and non-volatile memory. The storage units may be configured to store any combination of information, data, instructions, software code, etc.

The object recognition module 211 may be configured to recognize physical objects in the physical space. The object generation module 212 may be configured to generate virtual objects either to behave as independent virtual objects or to augment recognized physical objects. The event handler module 213 may be configured to detect whether an event occurs in the AR/VR environment. The control signal generation module 214 may be configured to receive information relating to an event and generate a control signal for transmission to the electronic device 100. The communication module 215 may be configured to facilitate communication between the AR/VR device 200 and the electronic device 100, for example.

In an embodiment, the object recognition module 211 may be configured to recognize objects in a physical space. The object recognition module 211 may communicate with the imaging device 220 and/or memory device 216 to recognize an object in the physical space. For example, the object recognition module 211 may receive visual data captured from the imaging device 220 and may process the visual data to determine whether one or more objects exist in the captured visual data. The object recognition module 211 may compare the captured objects that exist in the visual data with objects stored in the memory device 216.

For example, the object recognition module 211 may compare the pixels of a captured object with the pixels of a stored object in the storage according to known techniques. When a threshold percentage of pixels (e.g., 80%, 90%, 100%, and/or other percentages) of the captured object match the pixels of a stored object, the object recognition module 211 may determine that the captured object has been recognized as the stored object. In an embodiment, the threshold percentage may depend upon a resolution of the imaging device 220.

The object recognition module 211 may obtain information relating to the stored object and transmit the information relating to the stored object and the information relating to the captured object to the object generation module 212. The information transmitted to the object generation module 212 may include, for example, image data for the stored object, a type of the stored object, the location of the captured object in the physical space, a proximity of the captured object to other physical objects, context information relating to the stored object, context information relating to the captured object, and/or other data associated with the stored object or the captured object. In an embodiment, the object recognition module 211 may transmit the information relating to the stored object and the information relating to the captured object to one or more of the event handler module 213, the control signal generation module 214, and/or other modules of the processor 210.

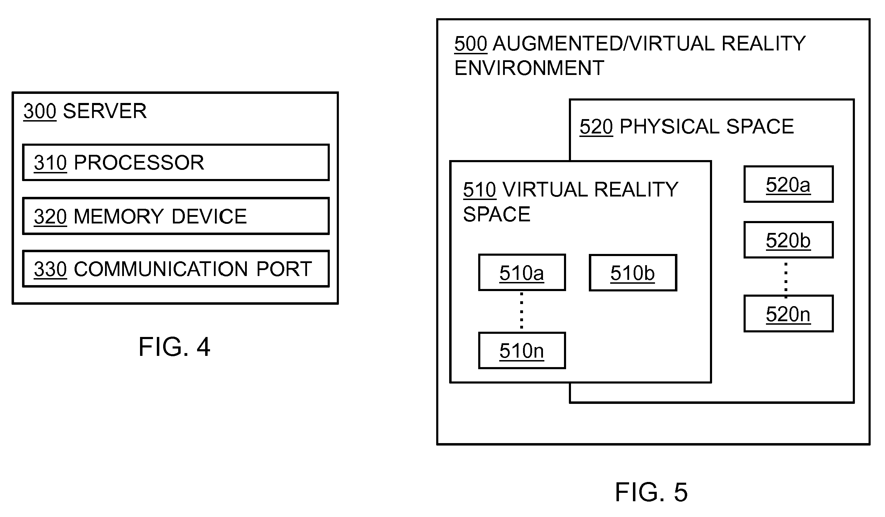

Figure 4 illustrates an embodiment of the server 300 in further detail. In an embodiment, the server 300 may be configured to communicate with one or more of the electronic device 100, the AR/VR device 200, the handheld/wearable device 102, and/or other devices in communication with the server 300. In the illustrated embodiment, the server 300 may comprise a processor 310, electronic storage or a memory device 320, and a communication port 330. In an embodiment, the server 300 may be part of a cloud computing system, i.e. "the cloud."

The processor 310 of the server 300 may be configured to receive data, recognize objects, handle events, send data, and/or provide other functionality. In an embodiment, the server 300 may be configured to receive, from the processor 110 of the electronic device 100, a control signal. The memory device 320 of the server 300 may comprise a lookup table that may be configured in a manner similar or the same as the lookup table of the electronic device 100 that comprises a plurality of control signals and a plurality of feedback responses. For example, the lookup table may include a plurality of haptic assets associated with a virtual object. The haptic assets may include parameters of the haptic effect(s) that are associated with the virtual object, such as amplitude, frequency, duration, etc. of the control signal that is used to drive the haptic output device 120 to generate the haptic effect(s) to the user of the system 10 when interacting with the virtual object or when the virtual object interacts with another virtual object, as described in further detail below. When the lookup table includes an entry relating to the control signal, the server 300 may communicate information including a feedback response to the feedback control module 111. When the lookup table of the server 300 does not include an entry relating to the control signal, the server 300 may communicate an indication that no match was found for the control signal to the feedback control module 111, or the server 300 may communicate a default control signal. In an embodiment, the server 300 may perform image processing and/or object recognition relating to data received from the electronic device 100.

In an embodiment, the server 300 may receive data related to an object captured by the imaging device 220 of the AR/VR device 200. The processor 310 of the server 300 may perform object recognition related to the captured object. The memory device 320 of the server 300 may comprise a lookup table that comprises one or more physical objects. The server 300 may determine whether the lookup table comprises an entry related to the object recognized from the received data. When the lookup table comprises an entry related to the recognized object, the server 300 may communicate information relating to a stored object that matches the recognized object to the object recognition module 211. When the server 300 does not recognize the recognized object, the server 300 may communicate an indication that no match was found to the object recognition module 211.

In an embodiment, the server 300 may receive data related to a physical object recognized by the object recognition module 211 of the processor 210 of the AR/VR device 200. The processor 310 of the server 300 may determine whether the memory device 320 of the server 300 has stored an association between the physical object and one or more virtual objects. In some implementations, the memory device 320 of the server 300 may comprise a lookup table that comprises physical objects, virtual objects, and one or more correlations between one or more physical objects and one or more virtual objects. When an association is found in the memory device 320 of the server 300, the server 300 may communicate, to the object generation module 212, data related to the associated virtual objects. When no association is found in the memory device 320 of the server 300, the server 300 may communicate that no association has been found.

In an embodiment, the server 300 may be configured to receive event data from the event handler module 213 of the processor 210 of the AR/VR device 200. The memory device 320 of the server 300 may include a lookup table that associates a plurality of events and a respective plurality of control signals. When some or all of the event data matches an event stored in the storage of the server 300, the processor 310 of the server 300 may communicate the event data related to the event to the event handler module 213. When the event data does not match an event stored in the storage, the processor 310 of the server 300 may communicate that no match was found to the AR/VR device 200.

The communication port 330 of the server 300 may include an interface through which a communication channel 350 may be maintained with, for example, the electronic device 100, the handheld/wearable device 102, the AR/VR device 200, and/or other devices in communication with the server 300. Data and/or signals may be received via the communication channel 350, and/or other communication channels through which the server 300 receives data and/or signals.

In an embodiment, when the captured object does not match a stored object, the object recognition module 211 may transmit data relating to the captured object to the server 300 such that the server 300 can perform object recognition. When the server 300 recognizes the captured object, the server 300 may communicate information relating to a stored object that matches the captured object to the object recognition module 211. The object recognition module 211 may transmit the information relating to the stored object from the server 300 and the information relating to the captured object to the object generation module 212. When the server 300 does not recognize the captured object, the server 300 may communicate an indication that no match was found.

In an embodiment, the object generation module 212 may receive information relating to a physical object from the object recognition module 211 and may generate one or more virtual objects to augment the physical object in the AR/VR environment. The object generation module 212 may access the storage to determine whether one or more virtual objects are associated with the physical object. When no virtual objects are associated with the physical object, the object generation module 212 may communicate with the server 300 to determine whether the memory device 320 of the server 300 has stored one or more associations between the one or more physical objects and one or more virtual objects. When an association is found in the memory device 320 of the server 300, the server 300 may communicate, to the object generation module 212, data related to the associated virtual objects.

When a virtual object is associated with a physical object identified in the information received from the object recognition module 211, the object generation module 212 may generate a VR space coincident with the physical space. Figure 5 illustrates a block diagram of an exemplary AR/VR environment 500. As illustrated, the AR/VR environment 500 comprises a physical space 520 comprising one or more physical objects 520a, 520b...520n and a VR space 510 comprising one or more virtual objects 510a, 510b...510n that may augment one or more physical objects 520a, 520b...520n in the physical space 520, or may be virtual objects that do not augment one or more physical objects.

In an embodiment, the object generation module 212 may augment a physical object 520a with one or more virtual objects 510a, 510b...510n in the VR space 510. For example, the object generation module 212 may display the VR space 510 (and one or more virtual objects 510a, 510b...510n) via a display of the AR/VR device 200. In some implementations, the VR space 510 and one or more virtual objects 510a, 510b...510n displayed may be displayed in a three-dimensional manner via the display of the AR/VR device 200.

The AR/VR environment 500 displayed via the display of the AR/VR device 200 may include the physical space 520 and the VR space 510. In an embodiment, the physical space 520 may be imaged by the imaging device 220 and displayed via the display. In an embodiment, the physical space 520 may simply be viewed through the display, such as in embodiments where the display is configured as an at least partially transparent display (e.g., a lens) through which the physical space 520 may be viewed. Whichever embodiment to display the physical space 520 is used, one or more virtual objects 510a, 510b...510n may be displayed coincident with or in association with one or more physical objects 520a, 520b...520n that exist in the physical space 520, thereby augmenting the one or more physical objects 520a, 520b...520n in the AR/VR environment 500. A single virtual object 510a may augment a single physical object 520a or a plurality of physical objects 520a, 520b...520n. A plurality of virtual objects 510a, 510b...510n may augment a single physical object 520a or a plurality of physical objects 520a, 520b...520n. The number and types of virtual objects 510a, 510b...510n that augment physical objects 520a, 520b...520n that exist in the physical space 520 is not limited to the examples described.

In an embodiment, the event handler module 213 may be configured to detect whether an event occurs in the AR/VR environment. The event handler module 213 may receive data from the imaging device 220, the object recognition module 211, the object generation module 212, the memory device 216, and/or other modules or devices of the AR/VR device 200. The memory device 216 of the AR/VR device 200 may store data related to one or more events that the AR/VR device 200 may recognize. For example, the memory device 216 of the AR/VR device 200 may store data related to events including, for example, an interaction between the electronic device 100 and the AR/VR environment 500, a confirmation of an action occurring with respect to the AR/VR environment 500, a confirmation that the electronic device 100 is recognized by the AR/VR device 200, an interaction between the electronic device 100 and one or more virtual objects displayed in the VR space 510, a generation of a specific type of virtual object to augment a physical object, a recognition of the electronic device 100, a recognition of the handheld/wearable device 102, an interaction between a user and the AR environment, and/or other occurrence related to the AR environment.

In an embodiment, the event handler module 213 may receive visual data from the imaging device 220, information relating to captured objects in the visual data from the object recognition module 211, information relating to virtual objects generated by the object generation module 212, and/or other information related to the AR environment. The event handler module 213 may compare the received information to data related to events stored in the memory device 216 to determine whether the information, or a portion of the information, is associated with an event. When the received information is associated with an event, the event handler module 213 may transmit event data that includes the received information and data relating to the associated event to the control signal generation module 214.

In an embodiment, the event handler module 213 may receive data from the processor 210 indicating that an interaction occurred between the electronic device 100 and the AR/VR environment 500, one or more virtual objects in the AR/VR environment 500 changed, input was received from the electronic device 100, input received from the electronic device 100 was processed by the AR/VR device 200, an interaction occurred between a user and the AR/VR environment 500, and/or other processing was performed by the AR/VR device 200. In some implementations, the event handler module 213 may compare the data received from the processor 210 with data stored in the memory device 216 to determine whether the data is associated with an event. When some or all of received information is associated with an event stored in the storage, the event handler module 213 may transmit event data including the received information and data relating to the associated event to the control signal generation module 214.

In an embodiment, when the received information is not associated with an event stored in the memory device 216, the event handler module 213 may transmit event data including the received information to the server 300 such that the server 300 can perform event handling. When some or all of received information is associated with an event stored in the storage of the server 300, the server 300 may communicate information relating to the associated event to the event handler module 213. The event handler module 213 may transmit event data including the received information and data relating to the associated event to the control signal generation module 214. When the received information is not associated with an event stored in the storage of the server 300, the server 300 may communicate an indication that no match was found.

In an embodiment, the control signal generation module 214 may be configured to receive the event data from the event handler module 213 and generate a control signal based on the event data for transmission to the electronic device 100. The storage of the AR/VR device 200 may include a lookup table that associates a plurality of events and a respective plurality of control signals. Based on the event data received from the event handler module 213, the control signal generation module 214 may generate a control signal for transmission to the electronic device 100. For example, the control signal generation module 214 may compare the received event data to the data stored at the storage. When some or all of the event data matches an event stored in the storage, the control signal generation module 214 may generate a control signal related to the control signal associated with the matched event. When the event data does not match an event stored in the storage, the control signal generation module 214 may communicate the event data to the server 300 to determine whether storage of the server has stored a control signal associated with some or all of the event data. The control signal may comprise, for example, information indicating that an event occurred, information indicating that a specific type of event occurred, information indicating one or more virtual objects have been/are displayed in the augmented virtual environment, information indicating one or more interactions between the electronic device 100 and the one or more virtual objects, and/or other information relating to the event in the AR/VR environment 500.

In an embodiment, the communication module 215 may be configured to facilitate communication between the AR/VR device 200, the electronic device 100, the server 300, the handheld/wearable device 102, and/or other devices that may be in communication with the AR/VR device 200. The communication module 215 may be configured to provide a wired or wireless communication channel 350 for communication between the AR/VR device 200 and the electronic device 100, and/or the handheld/wearable device 102. The communication module 215 may be configured to provide communication between the AR/VR device 200, the device 100, the handheld/wearable device 102, the server, and/or other device via the wired or wireless communication channel 350 or via a separate communication channel. The communication module 215 may be configured to communicate the control signal generated by the control signal generation module 214 to the electronic device 100 and/or the handheld device 102 via a wired or wireless communication channel 350.

In an embodiment, the processor 210 of the AR/VR device 200 may be configured to recognize the electronic device 100 when the electronic device 100 is moved within a field of view of the imaging device 220 and/or within the physical space 520 of the AR/VR environment 500. For example, the object recognition module 211 of the AR/VR device 200 may be configured to recognize the electronic device 100 by comparing image data from the imaging device 220 with image data stored in the memory device 216. The memory device 216 of the AR/VR device 200 may include image data corresponding to the electronic device 100. The memory device 216 may include image data corresponding to one or more indicia that may be disposed on the electronic device 100. The indicia may comprise a product code, a QR code, an image associated with the electronic device 100, and/or other image used to identify the electronic device 100. The processor 210 of the AR/VR device 200 may be configured to recognize an audible signature, an infrared signature, and/or other signature generated by the electronic device 100. In an embodiment, the control signal generation module 214 may generate a control signal that may be representative of the recognition of the electronic device 100 such that the feedback generated at the device 100 indicates the recognition.

In an embodiment, the processor 210 may be configured to receive a position of the electronic device 100 and/or an orientation of the electronic device 100 from the electronic device 100. The position and/or orientation of the electronic device 100 may be communicated via the communication channel 350 between the electronic device 100 and the AR/VR device 200. The processor 210 may be configured to determine the position of the electronic device 100 and/or the orientation of the electronic device 100 within the AR/VR environment 500 based on the received position and/or orientation. In an embodiment, a position indicator image and/or orientation indicator image may be disposed on the electronic device 100. The object recognition module 211 may recognize the position indicator image and/or the orientation indicator image when recognizing that the electronic device 100 is within the view of the imaging device and/or within the physical space 520 of the AR/VR environment 500. The position indicator image and/or the orientation indicator image data may be processed by the object recognition module 211, the event handler module 213, and/or other modules of the AR/VR device 200 to determine a position and/or an orientation of the electronic device 100 within the AR/VR environment 500. In an embodiment, the processor 210 may be configured to position the electronic device 100 within the AR/VR environment 500 without respect to a distance between a physical object and the electronic device 100.

The processor 210 may be configured to receive input from the electronic device 100. For example, the processor 210 may receive data from the electronic device 100 related to input that was received via the input element 150. The input received via the input element 150 may comprise, for example, a button press, a gesture, and/or other input, such as a touchscreen gesture or press, for example. The processor 210 of the AR device 200 may process the received data and perform functionality based on the processing. For example, the processor 210 may add, delete, change, and/or otherwise modify one or more virtual objects 510a, 510b...510n in the AR/VR environment 500. The processor 210 may send data to the electronic device 100 based on the processing. The processor 210 may perform other functionality based on the processing. In an embodiment, the processor 210 may receive input from the electronic device 100 that includes identifying indicia for the electronic device 100 and an indication that the input comprises the identifying indicia. The AR/VR device 200 may store the identifying indicia in the memory device 216 and associate the identifying indicia with the electronic device 100.

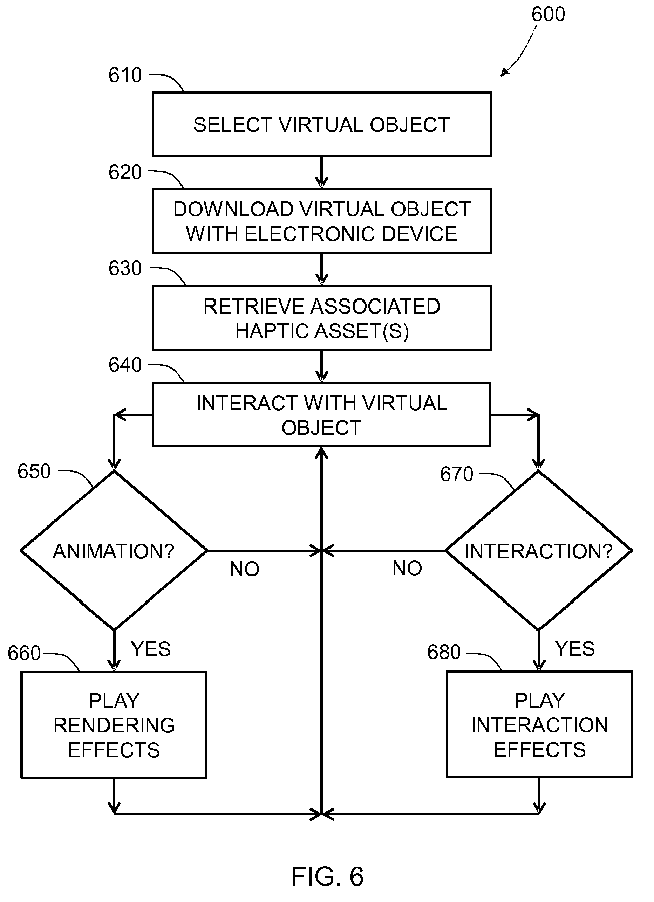

Figure 6 illustrates a method 600 in accordance with embodiments of the invention. As illustrated, the method starts at 610 when a user of the system 10 described above selects a virtual object from a list, catalog, menu, etc. that is presented to the user via the Internet, for example. The user may select the virtual object using the electronic device 100 described above. The virtual object may be stored on the server 300 described above and the server may be part of the cloud. At 620, the virtual object is downloaded with the electronic device 100. The downloaded virtual object may be stored in the memory device 113 in the processor 110 or the electronic device 100, or the downloaded virtual object may be stored in the memory device 216 of the processor 210 of the AR/VR device 200. At 630, a haptic asset(s) associated with the selected virtual object is/are retrieved from the server 300 either at substantially the same time the virtual object is downloaded, or after the virtual object is downloaded. In an embodiment, once the virtual object is selected, the user may be given a choice of haptic assets that may be associated with the virtual object. For example, if the virtual object is a dog, the user may be given a choice as to the personality of the dog, such as tame or aggressive, and/or the texture of the fur of the dog, such as short hair or long hair, etc. After the associated haptic asset(s) is/are retrieved, at 640 the user may interact with the virtual object in the AR/VR environment 500. In an embodiment, at 640, interaction may be between two virtual objects that the user is watching with the AR/VR device 200, or between a virtual object and another physical object that is in the physical space 520.

Continuing with the method 600 illustrated in Figure 6, it is determined at 650 whether there is animation of the virtual object. If it is determined that there is animation of the virtual object, rendering haptic effects may be played at 660 to bring the virtual object to life such that the user of the system 10 can feel the movements of the virtual object in the VR space 510. If it is determined at 650 that there is no animation of the virtual object, the method may return to 640. At 670, it is determined whether there is an interaction with the virtual object, either between the user and the virtual object or between two virtual objects in the VR space 510, or between a virtual object and another physical object in the physical space 520. If it is determined that there is interaction, interaction haptic effects may be played at 680 so that the user can feel a texture of the virtual object, for example. If it is determined that there is no interaction with the virtual object, the method may return to 640. In an embodiment, the determinations at 650 and 670 may be done at the same time or about the same time. For example, the user may interact with the virtual object while the virtual object is animated, such as when the user drags or moves the virtual object via a touch gesture on a touch screen or with a joystick, for example, and the virtual object collides with another virtual object, and the haptic effects that are generate may include a texture of the virtual object and a vibration representing the collision.

In an implementation of the system 10, a user may purchase a virtual bird object from application store, for example. Once the virtual object is loaded on the user's electronic device 100, which may be in the form of a tablet, the user may see the bird walking around on his/her desk through a camera of the tablet, and feel the footsteps of the bird on the tablet when using an augmented reality ("AR") application. When the user tries to touch the bird using his/her hand, the user may feel the texture of the bird through the handheld/wearable device 102, which in this embodiment may be a wearable device. The bird may then jump onto the user's hand, and the user may see and feel the bird walking on his/her hand as if it was a real bird.

In an implementation of the system 10, a user may hold a virtual writing implement, such as a pencil or a pen, and write on a real or virtual paper. The virtual writing implement may feel different based on the texture of the implement and the haptic effect representing writing with the implement may depend on the state of the implement, for example, whether the implement is a lead pencil or an inked pen, how much ink there is in the pen, whether the implement is broken or not, etc.

In an implementation of the system 10, a user may hold a full can of virtual candies in the user's right hand, and a haptic force feedback may be played on the user's right hand to make the user feel that the candy can is heavy. When the user starts to pour the virtual candies into his/her left hand, the haptic force feedback on the user's left hand may increase, so that the user may feel an increase in candies in his/her left hand, while the haptic force feedback on the user's right hand may be reduced so that the user may feel that the candy can is lighter and there are less candies in the can.

In an implementation of the system 10, a user may load a virtual bird object and associated haptic asset into a virtual reality ("VR") application, and choose a virtual character as his/her avatar. The user may feel haptic effects when his/her avatar interacts with the virtual bird.

In an implementation of the system 10, a first user and a second user may play a virtual reality ("VR") shooting game together by wearing head-mounted displays, for example Oculus Rift glasses. In the VR space, both of the users have an avatar to present themselves. The avatar of the first user may hold a virtual shotgun, and when the first user makes a gesture to fire the gun, the first user may feel the trigger effect as if he/she was firing a real gun. When the avatar of the second user is shot, the second user may feel a force effect on his/her chest.

### Augmented Reality Applications

In an augmented reality ("AR") application, the virtual object 510a in the virtual space 510 is overlaid onto the physical space 520. The virtual object 510a will interact with not only with the other overlaid virtual objects 510b...510n, but also with the physical objects 520a, 520b...520n. In the AR application, the user may directly interact with the virtual object 510a without the need of an avatar.

There are several types of interactions in an AR environment. For example, there may be interactions between the user and the virtual object 510a, interactions between the virtual object 520a in the virtual reality space 510 and a physical object 520a in the physical space 520, and/or interactions between two virtual objects 510a, 510b in the virtual reality space 510.

To design haptic effects for the virtual objects 510a, 510b...510n in an AR environment, a series of steps may be taken. First, a haptic effect may be triggered when there is an interaction involving a virtual object 510a. When a real world, physical object 520a in the physical space 520 initiates interaction with a virtual object 510a, 510b...510n in the virtual reality space 510, the interaction may be captured, a state of the virtual object, based on context, may be determined, and a static or dynamic haptic effect may be generated. When a virtual object 510a in the virtual reality space 510 initiates an interaction with another virtual object 510b...510n, the interaction may be captured, each state of each of the virtual objects, based on context, may be separately determined, and a static or dynamic haptic effect may be generated. When a virtual object 510a in the virtual reality space 510 initiates interaction with a real world, physical object 520a, 520b...520n in the physical space 520, the force based on an environment of the virtual object 510a may be calculated. As the virtual object moves towards the physical object or the user in three-dimensional space, the collision may be calculated based on the environment and the movement.

The interactions between the user and the virtual object 510a may include active interactions. For example, the user may directly touch and/or drag the virtual object 510a while feeling texture-type haptic effects, or the user may control and/or change the virtual object 510a with defined gestures while feeling confirmation haptic effects. There may also be passive interactions with the virtual object 510a, such as a virtual bird walking on the user's hand while a haptic effect that simulates "footsteps" is generated, or a virtual bullet hitting the user while a haptic effect that with simulates "hitting" are generated. For interactions between the virtual object 510a and the real world, physical object 520a, the virtual bird may walk on the real floor while the haptic effect that simulates "footsteps" is generated haptics, or the user may hit a virtual tennis ball with a real tennis racket while feeling a collision haptic effect. For interactions between two virtual objects 510a, 510b, for example, the virtual bird may eat a virtual worm that crawls on the user's hand or on the real floor, while a haptic effect simulating "pecking" may be generated, or the user may hit a virtual tennis ball with a virtual tennis racket while feeling the collision haptic effect.

In an embodiment, the handheld/wearable device 102 of the system 10 may be used to generate haptic effects for AR applications, and may be in the form of a wearable device. The wearable device may be configured to be placed on a finger, wrist, arm, shoulder, head, chest, etc. In an embodiment, multiple wearable devices may be used at the same time. In an embodiment in which the AR application is designed for a mobile device, the handheld/wearable device 102 may be in the form of a handheld device, such as a smartphone or tablet.

In an embodiment, a static haptic generation method may be used to implement haptic effects for virtual objects in an AR environment. First, the state machine for each virtual object may be designed. Predesigned haptic effects for each state may be stored as asset/property files (such as ivt file, hapt file, etc.), and packed with other assets/properties of the virtual object. When the state of the virtual object changes from one state to another state, haptic effects may be played accordingly. For example, when the virtual object is a virtual balloon, the virtual balloon may turn into a "touched mode" when the user "touches" the virtual balloon a texture-type haptic effect may be played. When the user "hits" the virtual balloon against a wall, the virtual balloon may change to "collision mode" and a collision-type haptic effect may be played. When the user "pricks" the virtual balloon with a needle, the virtual balloon may change to "explosion mode" and an explosion-type effect may be played.

In an embodiment, a dynamic haptic generation method may be used to implement haptic effects for virtual objects in an AR environment. First, physical properties for each virtual object, such as material, shape, weight, texture, animation, etc., may be determined. When the user asserts force to the virtual object, the parameters of the haptic effects may be calculated according to the amount, position, and angle of the force, as well as properties of the virtual object, such as a reflection factor and an absorption factor. Similar calculations may be made for situations in which the virtual object asserts force to the user, or virtual objects assert forces to each other. Predesigned haptic effects may not be needed for each virtual object, and the dynamic haptic effects may be calculated and played according to the force and physical properties of the object.

The state of the virtual object is used to produce the proper haptic feedback and therefore should be monitored. Haptic feedback may be customized based on the internal states of the virtual objects, as different states may correspond to different haptic effects. For example, a haptic effect that is triggered from a virtual rolling chair may be different than a haptic effect that is triggered from sitting on a virtual chair.

The haptic asset files (e.g., ivt file, hapt file, etc.) may be stored in local memory, or even as part of the codes of the application. In an embodiment of the invention, the haptic assets and properties may be associated with the virtual object while independent from any particular application. Such haptic enhanced virtual objects may be stored not only in local memory, but also on the cloud, i.e. on a memory device 320 of a server 310 that is part of a cloud computing system. By storing haptic enhanced virtual objects on the cloud, it may easier to share between different electronic devices 100 without occupying the local memory devices 113 of the electronic devices 100.

### Virtual Reality Applications

In a virtual reality ("VR") application, the virtual world may replace the real world when the user wears a head-mounted display device, such as VR glasses, for example Oculus Rift, and the user will not see himself/herself in the virtual world. Therefore, an avatar may be used to represent the user in the virtual environment in order to interact with other virtual objects.

The haptic effects may be played when there is an interaction between the avatar and the other virtual object. The avatar itself is a virtual object 510a, 510b,...510n, and therefore there is only one type of interaction in a VR application, i.e. interactions between two virtual objects. In an embodiment, the avatar may not be based on a human character, and may be anything such as a tool, a weapon, an animal, etc. The avatar may represent the user to interact with other virtual objects 510a, 510b,...510n and trigger haptic effects in the VR space 510.

In an embodiment, the handheld/wearable device 102 of the system 10 may be used to generate haptic effects for VR applications, and may be in the form of a wearable device. The wearable device may be configured to be placed on a finger, wrist, arm, shoulder, head, chest, etc. If there is a collision between the avatar and a virtual object, a collision haptic effect may be played on the wearable device worn by the user. In an embodiment, multiple wearable devices may be used at the same time. In an embodiment in which the VR application is designed for a mobile device, the handheld/wearable device 102 may be in the form of a handheld device, such as a smartphone or tablet.

In an embodiment, a static haptic generation method may be used to design the haptic effects. The method includes designing the state machine for each virtual object 510a, 510b,...510n, including the avatar. When determining which haptic effects to be played, at least two state machines should be considered, including the state of the avatar and the state of virtual object interacting with the avatar.

In an embodiment, a dynamic haptic generation method may be used to design the haptic effects. The parameters of the dynamic haptic effects may be determined by the forces between the avatar and the interacted virtual objects, as well as the physical properties of both objects.

Similar to an AR application, the state of the virtual object is used for producing the proper haptic feedback and different states will correspond to different haptic effects. In addition, the haptic enhanced virtual objects may be stored not only in local memory, but also on the cloud, i.e. on a memory device 320 of a server 310 that is part of a cloud computing system.

Embodiments of the present invention provide haptic designs that are object-based, as opposed to application-based or event-based. Embodiments of the present invention provide virtual objects with haptic assets that can be independent from certain applications and used in multiple AR/VR applications.

In an embodiment, the system 10 may include a plurality of electronic devices 100 and AR/VR devices 200 and multiple users of such devices may be able to concurrently interact with the same virtual object at the same time, but feel different haptic effects in accordance with their different interactions.

The embodiments described herein represent a number of possible implementations and examples and are not intended to necessarily limit the present disclosure to any specific embodiments. Instead, various modifications can be made to these embodiments as would be understood by one of ordinary skill in the art. Any such modifications are intended to be included within the scope of the present disclosure as protected by the following claims.

## Claims

1. A system comprising:
a memory device configured to store a virtual object and associated haptic asset;
an augmented or virtual reality device configured to generate an augmented or virtual reality space configured to display the virtual object; and
an electronic device comprising a haptic output device constructed and arranged to generate a haptic effect based on the haptic asset when the augmented or virtual reality device detects an interaction involving the virtual object.

2. The system according to claim 1, wherein the memory device is part of a server and the electronic device is configured to download the virtual object and associated haptic asset from the server.

3. The system according to claim 2, wherein the electronic device is configured to communicate the virtual object to the augmented or virtual reality device.

4. The system according to claim 1, wherein the electronic device is a handheld electronic device or a wearable device.

5. The system according to claim 4, wherein the electronic device is a handheld electronic device comprising a touch screen configured to allow a user of the system to interact with the virtual object.

6. The system according to claim 1, wherein the augmented or virtual reality device is a head-mounted display.

7. The system according to claim 1, wherein the memory device, the augmented or virtual reality device, and the electronic device are part of a single integrated device.

8. The system according to claim 1, wherein the haptic asset comprises at least one parameter of a control signal for the haptic output device to generate the haptic effect.

9. The system according to claim 1, wherein the at least one parameter is selected from the group consisting of an amplitude, a frequency and a duration of the control signal.

10. The system according to claim 1, wherein the electronic device is configured to determine a state of the virtual object, and wherein the haptic effect is a predesigned haptic effect according to the state of the virtual object.

11. The system according to claim 1, wherein the electronic device is configured to dynamically calculate haptic parameters according to a force input and physical properties of the virtual object.

12. The system according to claim 1, wherein the electronic device is configured to monitor a state of the virtual object, and wherein the haptic output device is configured to generate a different haptic effect when the state of the virtual object changes.

13. A method comprising:
retrieving a virtual object and associated haptic asset from a memory device;
displaying the virtual object in an augmented or virtual reality space generated by an augmented or virtual reality device; and
generating a haptic effect based on the haptic asset with a haptic output device when the augmented or virtual reality device detects an interaction involving the virtual object.

14. The method according to claim 13, further comprising downloading a virtual object from the memory device of a server with an electronic device.

15. The method according to claim 13, wherein generating the haptic effect comprises determining a state of the virtual object and playing a predesigned haptic effect according to the state of the virtual object.

16. The method according to claim 13, wherein generating the haptic effect comprises dynamically calculating haptic parameters according to a force input and physical properties of the virtual object.

17. The method according to claim 13, further comprising monitoring a state of the virtual object, and generating a different haptic effect when the state of the virtual object changes.

18. The system according to claim 2 or the method according to claim 14, wherein the server is part of a cloud computing system.
